# EUROPÄISCHE PATENTSCHRIFT

(11) **EP 0 794 409 B1**
(45) Veröffentlichungstag und Bekanntmachung des Hinweises auf die Patenterteilung: **25.07.2001**
(21) Anmeldenummer: 96810140.2
(22) Anmeldetag: 08.03.1996
(51) Int. Cl.: G01D 5/246, G01D 5/34

(54) **Verfahren zur Stellungsrückmeldung eines über eine Antriebswelle verstellbaren Stellgliedes**
Method for position feedback of a rotary positionable member
Méthode donnant réaction pour un corps en rotation

(43) Veröffentlichungstag der Anmeldung: 10.09.1997
(73) Patentinhaber: Fr. Sauter AG, 4016 Basel (CH)
(72) Erfinder: Susselin, Jean-Luc, 68640 Steinsoultz (FR)
(74) Vertreter: Bollhalder, Renato

(56) Entgegenhaltungen:
- US-A- 4 829 394
- US-A- 5 038 243

## Beschreibung

Die vorliegende Erfindung bezieht sich auf ein Verfahren zur Stellungsrückmeldung eines über eine Antriebswelle verstellbaren Stellgliedes, wie es im Oberbegriff des unabhängigen Patentanspruchs 1 definiert ist, und eine Vorrichtung zur Durchführung dieses Verfahrens. wie sie im Oberbegriff des unabhängigen Patentanspruchs 8 definiert ist.

Über eine Antriebswelle verstellbare Stellglieder werden in der Regeltechnik z. B. als Aktoren zur Regelung von Prozessen, Heizungs- und Klimaanlagen etc. verwendet. Je nach Anwendung ist für die Regler die Rückmeldung der aktuellen Stellung des Stellgliedes eine Notwendigkeit, insbesondere bei P-Reglern, bei Stellungsanzeigen und Nachlaufsteuerungen.

Bisher bekannt ist es, Stellungsrückmeldungen über ein Potentiometer auf der Achse des Stellgliedes vorzunehmen. Dieses Verfahren hat aber den Nachteil, dass bei häufigen Bewegungen des Stellgliedes die Widerstandsschicht des Potentiometers einem Verschleiss unterworfen ist, der letztlich zum Ausfall der Stellungsrückmeldung führt. Wird eine hohe Lebensdauer verlangt, müssen Potentiometer verwendet werden, die unverhältnismässig viel kosten.

Um das Verschleissproblem zu umgehen, werden daher immer häufiger Antriebe mit Schrittmotoren oder DC-Motoren mit Schritterkennung eingesetzt. Die Stellung des Stellgliedes kann dann über die Anzahl der Vorwärts- und Rückwärtsschritte elektronisch und verschleissfrei ermittelt werden. Diesem Verfahren haftet aber der Mangel an, dass bei Schrittverlusten, Spannungsausfällen und der Inbetriebsetzung die absolute Stellung des Stellgliedes nicht bekannt ist, da die Schrittzählung nicht mit dieser übereinstimmt. Um dem abzuhelfen, wird das Stellglied z. B. einmal täglich und nach jedem Netzausfall zur Reinitialisierung des Zählers in eine Null- oder Endlage geführt und die Zählelektronik wiedereingestellt. Danach wird das Stellglied in seine Arbeitsstellung zurückbewegt.

Derartige Schrittzählverfahren weisen den Nachteil auf, dass sie nicht allgemein anwendbar sind, da die erwähnten Initialisierungsbewegungen des Stellgliedes nur bei Regelanwendungen zulässig sind, bei denen vorübergehend grobe Abweichungen des Stellwertes vom Sollwert geduldet werden können.

Um zu verhindern, dass das Stellglied zur Reinitialisierung des Zählers in eine Endlage geführt werden muss, kann gemäss US-A-5 038 243 eine lokale Initialisierung vorgenommen werden, indem die absolute Position einer lokalen Referenzstellung bestimmt wird. Danach erfolgt eine Schrittzählung von dieser Referenzstellung aus. Zur Bestimmung der lokalen Referenzstellung und der aktuellen Stellung des Stellgliedes werden ein Zählrad mit einer Vielzahl von über den Umfang verteilten Markierungen sowie mindestens zwei Zahnräder mit einer unterschiedlichen Zähneanzahl und jeweils einer relativ kleinen Markieröffnung verwendet. Mit Hilfe des Zählrads wird während einer Umdrehung der Zahnräder die Phasenverschiebung der beiden Zahnräder ermittelt, woraus sich die absolute Position der Referenzstellung ergibt. Ausgehend von der Referenzstellung wird dann mittels des Zählrads die aktuelle Stellung des Stellgliedes bestimmt. Das beschriebene Verfahren ist aufgrund der Kombination einer absoluten und einer relativen Stellungsermittlung relativ aufwendig.

Aus dem US-Patent Nr. 4 829 394 ist ein Verfahren zur Ermittlung zweier Referenzstellungen eines über eine Antriebswelle verstellbaren Magnetkopfes bekannt, bei dem bei einer Verstellung des Magnetkopfes zwei auf derselben Achse parallel angeordnete, frei drehbar montierte Zahnräder gegeneinander verdreht werden. Die beiden Zahnräder greifen an einem mit der Antriebswelle kinematisch verbundenen Getrieberad ein, ihre Anzahl Zähne differiert um mindestens 1 und sie weisen im selben Abstand zur Achse je einen Ausschnitt auf. Mittels einer Lichtschranke wird ein Lichtschrankensignal erzeugt, wenn ein vom Sender der Lichtschranke ausgesandter Lichtstrahl, der parallel zur Achse der beiden Zahnräder im selben Abstand zu dieser wie die beiden Ausschnitte verläuft, durch die beiden Ausschnitte hindurch zum Empfänger der Lichtschranke gelangt. Die beiden Ausschnitte kommen nur in den beiden Referenzstellungen übereinander zu liegen, es werden also nur dort Lichtschrankensignale erzeugt, so dass das Erreichen der Referenzstellungen einfach ermittelbar ist.

Dieses Verfahren weist den Nachteil auf, dass nur die beiden Referenzstellungen des Magnetkopfes ermittelbar sind, nicht aber Zwischenstellungen.

Der Erfindung liegt daher die Aufgabe zugrunde, ein Verfahren und eine Vorrichtung zur Stellungsrückmeldung eines über eine Antriebswelle verstellbaren Stellgliedes der eingangs erwähnten Art zu schaffen, welche die obenerwähnten Nachteile nicht aufweisen. Die Vorrichtung soll bei möglichst geringen Gestehungskosten im wesentlichen verschleissfrei sein, und im Betrieb soll die absolute Stellung des Stellgliedes ermittelt werden können, ohne dazu vorher das Stellglied in einen der beiden Anschläge bewegen zu müssen.

Diese Aufgabe wird durch das erfindungsgemässe Verfahren und die erfindungsgemässe Vorrichtung gelöst, wie sie in den unabhängigen Patentansprüchen 1 und 8 definiert sind. Bevorzugte Ausführungsvarianten ergeben sich aus den abhängigen Patentansprüchen 2 bis 7 und 9 bis 11.

Das Wesen der Erfindung besteht darin, dass bei einem Verfahren zur Stellungsrückmeldung eines über eine Antriebswelle verstellbaren Stellgliedes bei einer Verstellung des Stellgliedes zwei an derselben Achse parallel angeordnete Zahnräder gegeneinander verdreht werden und die absolute gegenseitige Verdrehung der beiden Zahnräder mittels einer Lichtschranke ermittelt wird. Die beiden Zahnräder greifen entweder an der Antriebswelle oder an einem mit dieser kinematisch verbundenen Rotationsteil ein und weisen im selben Abstand zur Achse je einen sich zirkular über einen maximalen Zentriwinkel von 180° erstreckenden Ausschnitt auf. Ihre Anzahl Zähne differiert um mindestens 1 und mindestens eines von ihnen ist frei drehbar auf der Achse montiert. Der Sender der Lichtschranke sendet einen Lichtstrahl aus, der parallel zur Achse der beiden Zahnräder im selben Abstand zu dieser wie die beiden Ausschnitte verläuft. Die zeitliche Länge des Lichtschrankensignals, das erzeugt wird, wenn der vom Sender der Lichtschranke ausgesandte Lichtstrahl durch die beiden Ausschnitte hindurch zum Empfänger der Lichtschranke gelangt, wird zur Ermittlung der absoluten gegenseitigen Verdrehung der beiden Zahnräder bis zu einem maximalen Verdrehungswinkel verwendet, der dem Zentriwinkel entspricht, über den sich der kürzere Ausschnitt erstreckt.

Mit dem erfindungsgemässen Verfahren kann die absolute Stellung des Stellgliedes ermittelt werden, ohne dass dazu vorher das Stellglied in einen der beiden Anschläge bewegt werden muss und ohne dass die Vorrichtung zur Durchführung dieses Verfahrens einem bedeutsamen Verschleiss unterworfen ist.

Im folgenden werden das erfindungsgemässe Verfahren und die erfindungsgemässe Vorrichtung unter Bezugnahme auf die beigefügten Zeichnungen und anhand eines Ausführungsbeispiels detaillierter beschrieben. Es zeigen:

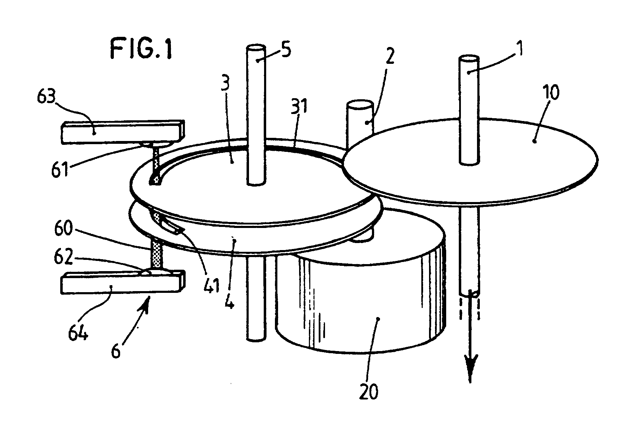

- Fig. 1 -: eine Vorrichtung zur Stellungsrückmeldung eines über eine motorgetriebene Antriebswelle verstellbaren Stellgliedes in perspektivischer Darstellung;

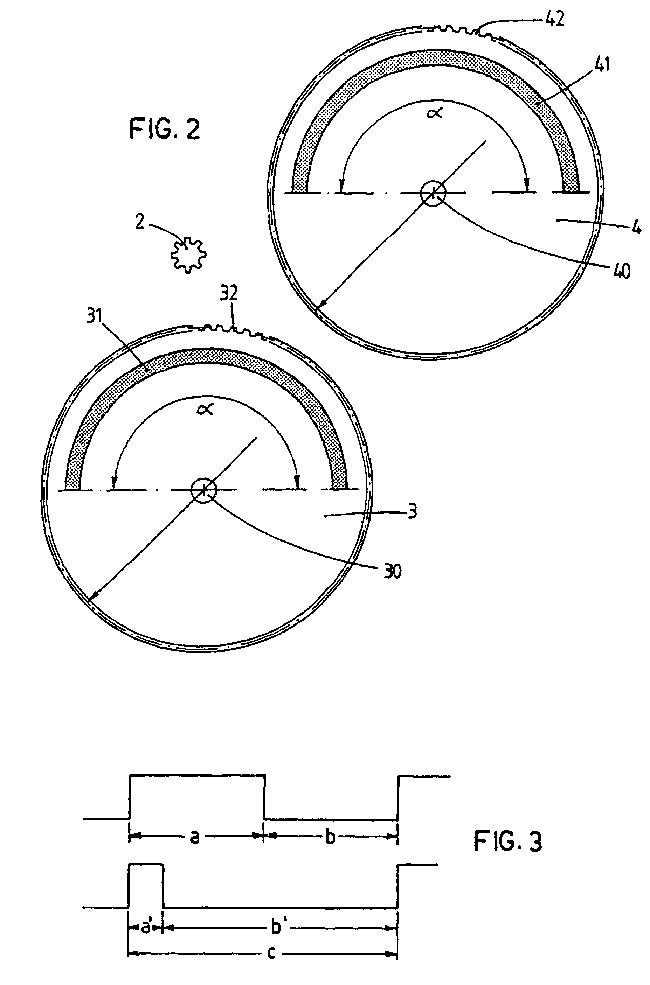

- Fig. 2 -: die beiden gegeneinander verdrehbaren Zahnräder und das Ritzel, durch das sie gedreht werden, aus Fig. 1 in teilweise schematischer Draufsicht und
- Fig. 3 -: zwei Diagramme, in denen bei der Messung der gegenseitigen Verdrehung der beiden Zahnräder aus Fig. 1 erhaltene Signale für jeweils eine Stellung des Stellgliedes dargestellt sind.

### Figuren 1 und 2

Ein Motor 20 betätigt über ein Ritzel 2 und ein Zahnrad 10 eine Antriebswelle 1, welche ein nicht dargestelltes Stellglied antreibt. Das Zahnrad 10, das mit der Antriebswelle 1 fest verbunden ist, und das Ritzel 2 bilden hierbei ein Untersetzungsgetriebe.

Die Vorrichtung zur Stellungsrückmeldung weist zwei an einer Achse 5 angeordnete Zahnräder 3, 4 mit zentralen Löchern 30, 40 auf. Eines der beiden Zahnräder 3, 4 ist frei drehbar auf der Achse 5 montiert, während das andere mit der Achse 5 fest verbunden oder ebenfalls frei drehbar auf dieser montiert sein kann. Dadurch ist gewährleistet, dass sich die beiden Zahnräder 3, 4 gegeneinander verdrehen können. Die beiden Zahnräder 3, 4 weisen zumindest annähernd den gleichen Durchmesser auf und greifen am Ritzel 2 ein. Die Anzahl ihrer Zähne 32, 42 beträgt z. B. 80 und 81. Sie muss sich auf jeden Fall um mindestens 1 unterscheiden, so dass die beiden Zahnräder 3, 4 bei einer Drehung des Ritzels 2 gegeneinander verdreht werden. Der Unterschied der Anzahl Zähne darf nicht zu gross sein, damit die beiden Zahnräder 3, 4 auf der gleichen Achse 5 sitzend gemeinsam am gleichen Ritzel 2 eingreifen können.

Da die Antriebswelle 1 und damit das Stellglied mit den beiden Zahnrädern 3, 4 kinematisch verbunden ist, kann eine Verstellung des Stellgliedes über die Messung der Verdrehung der beiden Zahnräder 3, 4 gemessen werden. Wenn bei einer Verstellung des Stellgliedes von einem der beiden Anschläge zum anderen die gegenseitige Verdrehung der beiden Zahnräder 3, 4 weniger als 360° beträgt, kann jeder Stellung des Stellgliedes ein absoluter Verdrehungswert der beiden Zahnräder 3, 4 zugeordnet werden.

Die gegenseitige Verdrehung der beiden Zahnräder 3, 4 wird beim dargestellten Ausführungsbeispiel mit Hilfe einer Lichtschranke 6 optisch ermittelt. Die Lichtschranke 6 umfasst einen Sender 61, der ungefähr parallel zur Achse 5 der beiden Zahnräder 3, 4 einen Lichtstrahl 60 in Richtung eines Empfängers 62 aussendet. Über die Supportteile 63, 64 werden der Sender 61 und der Empfänger 62 mit Strom versorgt und die erzeugten Lichtschrankensignale einer nicht dargestellten Steuerschaltung zugeführt.

Die Zahnräder 3, 4 weisen in dem radialen Abstand zur Achse 5, in dem der Lichtstrahl 60 verläuft, je einen zirkular verlaufenden Schlitz 31, 41 auf, der sich über einen Winkel α erstreckt. Der Lichtstrahl 60 kann nur dann zum Empfänger 62 gelangen und ein Lichtschrankensignal erzeugen, wenn sich auf dem direkten Weg vom Sender 61 zum Empfänger 62 Schlitzbereiche der beiden Zahnräder 3, 4 befinden. Befindet sich auf dem direkten Weg ein lichtundurchlässiger Bereich mindestens eines der beiden Zahnräder 3, 4, dann wird kein Lichtschrankensignal erzeugt. Während einer Umdrehung (Zyklus) der beiden Zahnräder 3, 4 wird während einer gewissen Zeit (Signallänge) ein Lichtschrankensignal erzeugt und während einer gewissen Zeit nicht. Das Verhältnis Signallänge/Zykluslänge ist ein Mass für die absolute gegenseitige Verdrehung der beiden Schlitze 31, 41 und somit der beiden Zahnräder 3, 4 und daher auch für die Stellung des Stellgliedes.

Die auf diese Weise maximal messbare, absolute gegenseitige Verdrehung entspricht dem Zentriwinkel α, über den sich der kürzere Schlitz 31, 41 erstreckt, aber höchstens 180°. Erstrecken sich die beiden Schlitze 31, 41 über mehr als 180°, ist die Beziehung zwischen dem Verhältnis Signallänge/Zykluslänge und der absoluten, gegenseitigen Verdrehung der beiden Zahnräder 3, 4 nicht mehr eindeutig. Idealerweise erstrecken sich daher beide Schlitze 31, 41 über einen Zentriwinkel von 180°. Bei Zähnezahlen von 80 und 81 für die beiden Zahnräder 3, 4 lässt sich dann die Stellung des Stellgliedes in 40 Schritten messen, was in Prozenten ausgedrückt Hubinkrementen von 2,5% des Vollhubes entspricht. Diese Auflösung genügt für weite Bereiche der Regeltechnik vollauf. Gewünschtenfalls kann die Auflösung durch Verfeinerung der Zahnung noch verbessert werden.

Um mit dem beschriebenen Verfahren die Stellung des Stellgliedes nach einem Stromunterbruch zu ermitteln, reicht eine Umdrehung der beiden Zahnräder 3, 4 aus. Es ist nicht nötig, das Stellglied in einen der beiden Anschläge zu bewegen.

### Figur 3

Die beiden Diagramme zeigen das von der Lichtschranke 6 während einer Umdrehung der beiden Zahnräder 3, 4 erzeugte Lichtschrankensignal für zwei Stellungen des Stellgliedes, wobei sich die Schlitze 31, 41 der beiden Zahnräder 3, 4 im dargestellten Fall über einen Zentriwinkel von 180° erstrecken. Mit c ist die Zykluslänge, mit a bzw. a' die Signallänge und mit b bzw. b' die Zeitdauer, während der kein Signal erzeugt wird, bezeichnet. Das Verhältnis Signallänge/Zykluslänge kann Werte von 0 bis 1/2 annehmen.

Da sowohl die Signallänge als auch die Zykluslänge umgekehrt proportional zu der Rotationsgeschwindigkeit der Zahnräder 3, 4 ist, ist das Verhältnis Signallänge/Zykluslänge und somit die Messung der Stellung des Stellgliedes unabhängig von der Rotationsgeschwindigkeit.

Im oberen Diagramm ist a = b = c/2 und somit das Verhältnis Signallänge/Zykluslänge a/c = 1/2. Dies entspricht dem Fall, wo die Schlitze 31, 41 genau übereinanderliegen und die beiden Zahnräder 3, 4 nicht gegeneinander verdreht sind.

Im unteren Diagramm ist a' ≅ b'/6 und somit das Verhältnis Signallänge/Zykluslänge a'/c ≅ 1/7. Dies entspricht dem Fall, wo die Schlitze 31, 41 in einem Bereich übereinanderliegen, der sich über einen Zentriwinkel von ungefähr 51,5° erstreckt, und die beiden Zahnräder 3, 4 ungefähr um 128,5° gegeneinander verdreht sind.

Die erhaltenen Lichtschrankensignale werden mit einer nicht dargestellten Steuerschaltung ausgewertet.

Ist der Motor 20 ein Synchronmotor, so kann das Lichtschrankensignal dazu verwendet werden, ein Tor zu öffnen, während dessen Öffnung die Netz-Nulldurchgänge des Motors gezählt werden. Dadurch erhält man bei jeder Umdrehung der beiden Zahnräder 3, 4 eine frequenzkompensierte Zahl, die direkt proportional zur zu messenden Stellgrösse ist und z.B.über ein Pulsweiten-Modulationsverfahren in eine analoges Signal umgewandelt werden kann. Mit einem Synchronmotor erübrigt sich somit die Messung der Zykluslänge.

Zu der vorbeschriebenen Vorrichtung zur Stellungsrückmeldung sind weitere, konstruktive Variationen realisierbar. Z.B. kann die Betätigung der Antriebswelle 1 natürlich, neben der dargestellten, auf viele verschiedene andere Arten erfolgen. Zur Stellungsrückmeldung können die beiden Zahnräder 3, 4 an einem beliebigen mit der Antriebswelle 1 kinematisch verbundenen Rotationsteil eingreifen. Vorteilhafterweise greifen sie an einem Rotationsteil ein, der bei einer Verstellung des Stellgliedes eine möglichst hohe Drehzahl aufweist.

## Patentansprüche

1. Verfahren zur Stellungsrückmeldung eines über eine Antriebswelle (1) verstellbaren Stellgliedes, bei dem bei einer Verstellung des Stellgliedes zwei an derselben Achse (5) parallel angeordnete Zahnräder (3, 4), die beide entweder an der Antriebswelle (1) oder an einem mit dieser kinematisch verbundenen Rotationsteil (2) eingreifen, deren Anzahl Zähne um mindestens 1 differiert, die im selben Abstand zur Achse (5) je einen sich zirkular über einen maximalen Zentriwinkel von 180° erstreckenden Ausschnitt (31, 41) aufweisen und von denen mindestens eines frei drehbar auf der Achse (5) montiert ist, gegeneinander verdreht werden und ein Lichtschrankensignal erzeugt wird, wenn ein Lichtstrahl (60) einer Lichtschranke (6), der parallel zur Achse (5) im selben Abstand zu dieser wie die beiden Ausschnitte (31, 41) verläuft, vom Sender (61) der Lichtschranke (6) durch die beiden Ausschnitte (31, 41) hindurch zum Empfänger (62) der Lichtschranke (6) gelangt, dadurch gekennzeichnet, dass die zeitliche Länge des Lichtschrankensignals zur Ermittlung der absoluten gegenseitigen Verdrehung der beiden Zahnräder (3, 4) bis zu einem maximalen Verdrehungswinkel verwendet wird, der dem Zentriwinkel entspricht, über den sich der kürzere Ausschnitt (31, 41) erstreckt.

2. Verfahren nach Anspruch 1, dadurch gekennzeichnet, dass als Mass für die absolute gegenseitige Verdrehung der beiden Zahnräder (3, 4) das Verhältnis zwischen der zeitlichen Länge des Lichtschrankensignals und der Umdrehungszeit eines Zahnrads (3, 4) ermittelt wird.

3. Verfahren nach Anspruch 1, bei dem die Antriebswelle (1) von einem Synchronmotor (20) betätigt wird, dadurch gekennzeichnet, dass das Lichtschrankensignal zur Steuerung der Zählung der Netz-Nulldurchgänge des Synchronmotors (20) verwendet wird.

4. Verfahren nach einem der Ansprüche 1 bis 3, bei dem die Antriebswelle (1) von einem Motor (20) betätigt wird, dadurch gekennzeichnet, dass zur Erkennung, ob das Stellglied oder ein zwischen dem Stellglied und dem Motor (20) liegendes Rotationsteil (1, 2, 10) blockiert ist, das Resultat der Ermittlung der absoluten gegenseitigen Verdrehung der beiden Zahnräder (3, 4) mit dem Betriebszustand des Motors. (20) verglichen wird.

5. Verfahren nach Anspruch 4, dadurch gekennzeichnet, dass mittels der Blockiererkennung mindestens einer der beiden Anschläge des Stellgliedes ermittelt und der Motor (20) bei Erreichen dieses Anschlags abgeschaltet wird.

6. Verfahren nach Anspruch 4 oder 5, dadurch gekennzeichnet, dass für beide Anschläge des Stellgliedes mittels der Blockiererkennung Werte für die absolute gegenseitige Verdrehung der beiden Zahnräder (3, 4) ermittelt werden und anschliessend eine Steuerschaltung aufgrund dieser beiden Verdrehungswerte so kalibriert wird, dass eine Auswertung von Verdrehungswerten durch diese Steuerschaltung für den Arbeitshub des Stellgliedes Werte zwischen 0 und 100 % oder aus einem anderen vorbestimmbaren Bereich ergibt.

7. Verfahren nach einem der Ansprüche 4 bis 6, dadurch gekennzeichnet, dass für beide Anschläge des Stellgliedes mittels der Blockiererkennung Werte für die absolute gegenseitige Verdrehung der beiden Zahnräder (3, 4) ermittelt werden und die ermittelten Verdrehungswerte in einem schreib- und löschbaren Speicherbaustein, der die gespeicherten Daten auch bei Stromausfall nicht verliert, gespeichert werden.

8. Vorrichtung zur Stellungsrückmeldung eines über eine Antriebswelle (1) verstellbaren Stellgliedes zur Durchführung des Verfahrens nach Anspruch 1, die zwei an derselben Achse (5) parallel angeordnete Zahnräder (3, 4) umfasst, die beide entweder an der Antriebswelle (1) oder an einem mit dieser kinematisch verbundenen Rotationsteil (2) eingreifen, deren Anzahl Zähne um mindestens 1 differiert, die im selben Abstand zur Achse (5) je einen Ausschnitt (31, 41) aufweisen und von denen mindestens eines frei drehbar auf der Achse (5) montiert ist, so dass sie bei einer Verstellung des Stellgliedes gegeneinander verdreht werden, sowie eine Lichtschranke (6), deren Lichtstrahl (60) parallel zur Achse (5) im selben Abstand zu dieser wie die beiden Ausschnitte (31, 41) verläuft, dadurch gekennzeichnet, dass sich die beiden Ausschnitte (31, 41) zirkular über Zentriwinkel erstrecken, die mindestens so gross sind wie der maximale Verdrehungswinkel der beiden Zahnräder (3, 4), der noch ermittelbar sein soll, maximal aber 180°.

9. Vorrichtung nach Anspruch 8, dadurch gekennzeichnet, dass sich jeder der beiden Ausschnitte (31, 41) zirkular über einen Zentriwinkel von 180° erstreckt.

10. Vorrichtung nach Anspruch 9, dadurch gekennzeichnet, dass die genannten Ausschnitte zirkular verlaufende Schlitze (31, 41) sind und die Zahnräder (3, 4) aus Kunststoff sein können.

11. Vorrichtung nach einem der Ansprüche 8 bis 10, bei der die Antriebswelle (1) über ein Untersetzungsgetriebe von einem Motor (20) mit einem Ritzel (2) als Rotationsteil betätigt wird, dadurch gekennzeichnet, dass die beiden Zahnräder (3, 4) am Ritzel (2) eingreifen.

## Claims

1. Method for position feedback of an actuator which can be adjusted via a drive shaft (1) in which in the event of an adjustment of the actuator two toothed wheels (3, 4), which are arranged in a parallel fashion on the same spindle (5), which both engage either on the drive shaft (1) or on a rotating part (2) kinematically connected to the latter, whose number of teeth differs by at least 1, which in each case have at the same spacing from the spindle (5) a cutout (31, 41) extending in a circular fashion over a maximum central angle of 180°, and of which at least one is mounted in a freely rotatable fashion on the spindle (5), are rotated counter to one another, and a light barrier signal is generated when a light beam (60) of a light barrier (6) which runs parallel to the spindle (5) at the same spacing from the latter as the two cutouts (31, 41), passes from the transmitter (61) of the light barrier (6) through the two cutouts (31, 41) to the receiver (62) of the light barrier (6), characterized in that the temporal length of the light barrier signal is used to determine the absolute mutual rotation of the two toothed wheels (3, 4) up to a maximum angle of rotation which corresponds to the central angle over which the shorter cutout (31, 41) extends.

2. Method according to Claim 1, characterized in that the ratio between the temporal length of the light barrier signal and the period of revolution of a toothed wheel (3, 4) is determined as a measure of the absolute mutual rotation of the two toothed wheels (3, 4).

3. Method according to Claim 1, in which the drive shaft (1) is actuated by a synchronous motor (20), characterized in that the light barrier signal is used to control the counting of the mains zero crossings of the synchronous motor (20).

4. Method according to one of Claims 1 to 3, in which the drive shaft (1) is actuated by a motor (20), characterized in that the result of the determination of the absolute mutual rotation of the two toothed wheels (3, 4) is compared with the operating state of the motor (20) in order to detect whether the actuator or a rotating part (1, 2, 10) situated between the actuator and the motor (20) is blocked.

5. Method according to Claim 4, characterized in that at least one of the two stops of the actuator is determined by detecting blocking, and the motor (20) is switched off when this stop is reached.

6. Method according to Claim 4 or 5, characterized in that for both stops of the actuator, values are determined for the absolute mutual rotation of the two toothed wheels (3, 4) by detecting blocking, and subsequently a control circuit is calibrated on the basis of these two rotation values such that an evaluation of rotation values by this control circuit for the working stroke of the actuator yields values of between 0 and 100% or from another predeterminable range.

7. Method according to one of Claims 4 to 6, characterized in that values for the absolute mutual rotation of the two toothed wheels (3, 4) are determined for both stops of the actuator by detecting blocking, and the rotation values determined are stored in a writable and erasable memory module which does not lose the stored data even in the case of power failure.

8. Device for position feedback of an actuator, which can be adjusted via a drive shaft (1), for carrying out the method according to Claim 1, which comprises two toothed wheels (3, 4) which are arranged in a parallel fashion on the same spindle (5), which both engage either on the drive shaft (1) or on a rotating part (2) kinematically connected to the latter, whose number of teeth differs by at least 1, which in each case have at the same spacing from the spindle (5) a cutout (31, 41), and of which at least one is mounted in a freely rotatable fashion on the spindle (5), such that they are rotated counter to one another in the event of adjustment of the actuator, as well as a light barrier (6) whose light beam (60) runs parallel to the spindle (5) at the same spacing from the latter as the two cutouts (31, 41), characterized in that the two cutouts (31, 41) extend in a circular fashion over central angles which are at least as large as the maximum angle of rotation of the two toothed wheels (3, 4) which it still should be possible to determine, but are at most 180°.

9. Device according to Claim 8, characterized in that each of the two cutouts (31, 41) extends in a circular fashion over a central angle of 180°.

10. Device according to Claim 9, characterized in that the said cutouts are slots (31, 41) which run in a circular fashion, and the toothed wheels (3, 4) can be made of plastic.

11. Device according to one of Claims 8 to 10, in which the drive shaft (1) is actuated via a gear reducer by a motor (20) with a pinion (2) as rotating part, characterized in that the two toothed wheels (3, 4) engage on the pinion (2).

## Revendications

1. Procédé pour la signalisation en retour de la position d'un organe de commande réglable par un arbre moteur (1), dans lequel, lors d'un réglage de l'organe de commande, deux roues dentées (3, 4) disposées en parallèle sur le même axe (5), qui toutes les deux engrènent soit avec l'arbre moteur (1) soit avec une pièce rotative (2) cinématiquement reliée à celui-ci, dont le nombre de dents diffère d'au moins 1, qui présentent chacune à la même distance de l'axe (5) une découpe (31, 41) s'étendant en arc de cercle sur un angle au centre maximal de 180° et dont l'une au moins est montée à rotation libre sur l'axe (5), sont mises en rotation l'une par rapport à l'autre et un signal de barrage photoélectrique est produit lorsqu'un faisceau lumineux (60) d'un barrage photoélectrique (6), qui se propage parallèlement à l'axe (5) à la même distance de celui-ci que les deux découpes (31, 41), parvient de l'émetteur (61) du barrage photoélectrique (6) à travers les deux découpes (31, 41) jusqu'au récepteur (62) du barrage photoélectrique (6), caractérisé en ce que la durée temporelle du signal du barrage photoélectrique est utilisée pour déterminer la rotation mutuelle absolue des deux roues dentées (3, 4) jusqu'à un angle de rotation maximal, qui correspond à l'angle au centre sur lequel s'étend la découpe (31, 41) la plus courte.

2. Procédé selon la revendication 1, caractérisé en ce que l'on détermine, comme mesure de la rotation mutuelle absolue des deux roues dentées (3, 4), le rapport entre la durée temporelle du signal du barrage photoélectrique et le temps de révolution d'une roue dentée (3, 4).

3. Procédé selon la revendication 1, dans lequel l'arbre moteur (1) est actionné par un moteur synchrone (20), caractérisé en ce que l'on utilise le signal du barrage photoélectrique pour commander le comptage des passages par zéro du réseau du moteur synchrone (20).

4. Procédé selon l'une quelconque des revendications 1 à 3, dans lequel l'arbre moteur (1) est actionné par un moteur (20), caractérisé en ce que, pour reconnaître si l'organe de commande ou une pièce rotative (1, 2, 10) située entre l'organe de commande et le moteur (20) est bloqué(e), on compare le résultat de la détermination de la rotation mutuelle absolue des deux roues dentées (3, 4) avec l'état de marche du moteur (20).

5. Procédé selon la revendication 4, caractérisé en ce que l'on détermine au moins une des deux butées de l'organe de commande au moyen de la reconnaissance du blocage et on coupe le moteur (20) lorsque cette butée est atteinte.

6. Procédé selon la revendication 4 ou 5, caractérisée en ce que l'on détermine pour les deux butées de l'organe de commande, au moyen de la reconnaissance du blocage, des valeurs pour la rotation mutuelle absolue des deux roues dentées (3, 4) et on calibre ensuite un circuit de commande sur la base de ces deux valeurs de rotation de manière telle qu'une exploitation de valeurs de rotation par ce circuit de commande pour la course de travail de l'organe de commande fournisse des valeurs comprises entre 0 et 100 % ou d'un autre domaine à prédéterminer.

7. Procédé selon l'une quelconque des revendications 4 à 6, caractérisé en ce que l'on détermine pour les deux butées de l'organe de commande, au moyen de la reconnaissance du blocage, des valeurs pour la rotation mutuelle absolue des deux roues dentées (3, 4) et on stocke les valeurs de rotation déterminées dans un module de mémoire à écriture et effacement, qui ne perd pas les données stockées même en cas de coupure de courant.

8. Dispositif pour la signalisation en retour de la position d'un organe de commande réglable par un arbre moteur (1) pour la mise en oeuvre du procédé suivant la revendication 1, qui comprend deux roues dentées (3, 4) montées en parallèle sur le même axe (5), qui toutes les deux engrènent soit avec l'arbre moteur (1) soit avec une pièce rotative (2) cinématiquement reliée à celui-ci, dont le nombre de dents diffère d'au moins 1, qui présentent chacune à la même distance de l'axe (5) une découpe (31, 41) et dont l'une au moins est montée à rotation libre sur l'axe (5), de telle manière qu'elles tournent l'une par rapport à l'autre lors d'un réglage de l'organe de commande, ainsi qu'un barrage photoélectrique (6), dont le faisceau lumineux (60) se propage parallèlement à l'axe (5) à la même distance de celui-ci que les deux découpes (31, 41), caractérisé en ce que les deux découpes (31, 41) s'étendent en arc de cercle sur des angles au centre, qui sont au moins aussi grands que l'angle de rotation maximal des deux roues dentées (3, 4), qui doit encore pouvoir être déterminé, mais au maximum de 180°.

9. Dispositif suivant la revendication 8, caractérisé en ce que chacune des deux découpes (31, 41) s'étend en arc de cercle sur un angle au centre de 180°.

10. Dispositif suivant la revendication 9, caractérisé en ce que les découpes précitées sont des fentes tracées en arc de cercle (31, 41) et les roues dentées (3, 4) peuvent être en matière plastique.

11. Dispositif selon l'une quelconque des revendications 8 à 10, dans lequel l'arbre moteur (1) est actionné via un engrenage de démultiplication par un moteur (20) ayant un pignon (2) comme pièce rotative, caractérisé en ce que les deux roues dentées (3, 4) engrènent avec le pignon (2).
